# EUROPÄISCHE PATENTSCHRIFT

(11) **EP 2 222 133 B1**
(45) Veröffentlichungstag und Bekanntmachung des Hinweises auf die Patenterteilung: **21.05.2014**
(21) Anmeldenummer: 10001734.2
(22) Anmeldetag: 19.02.2010
(51) Int. Cl.: H05B 6/12, A47J 36/24, F24C 15/00, H05B 3/74, H05B 1/02, H05B 6/06, A47F 10/06, A47J 36/02

(54) **Kochplatte, GN-Speisenbehälter, Kombination derselben und Verfahren zum Garen oder Fertiggaren von Speisen mit einer solchen Kombination**
Cooking plate, GN food container, combination of same and method for cooking or convenience cooking food with such a combination
Plaque de cuisson, récipient à produits alimentaires gastronormes, combinaison de ceux-ci et procédé de cuisson ou de cuisson à point de plats dotés d'une telle combinaison

(30) Priorität: 20.02.2009 DE 102009009842; 18.02.2010 DE 102010008420
(43) Veröffentlichungstag der Anmeldung: 25.08.2010
(73) Patentinhaber: Maier, Max, 71636 Ludwigsburg (DE)
(72) Erfinder: Maier, Max, 71636 Ludwigsburg (DE)
(74) Vertreter: Schumacher & Willsau

(56) Entgegenhaltungen:
- EP-A1- 1 239 705
- WO-A1-2007/042247
- WO-A1-2008/017113
- WO-A2-01/97570
- DE-A1- 4 439 095
- DE-A1- 4 439 777
- DE-A1-102005 040 206
- DE-A1-102007 008 896
- DE-U1- 20 116 711
- DE-U1- 29 907 003
- DE-U1-202005 003 534
- US-A- 3 740 513
- US-A- 6 111 224

## Beschreibung

Die Erfindung betrifft eine Kombination aus einer Kochplatte und einem Speisenbehälter nach dem Oberbegriff des Anspruchs 1 und ein Verfahren zum Garen oder Fertiggaren von Speisen mit einer solchen Kombination nach dem Oberbegriff des Anspruchs 7.

Die europäische Gastro-Norm (GN) für Speisenbehälter ist EN 631-1 (1992) und 631-2 (1999).

Eine Kochplatte für eine Kombination der eingangs genannten Art ist aus der Druckschrift DE 35 29 699 C2 bekannt. Sie ist dort Teil einer Anordnung zum Braten mit einem Bratgefäß. Das Bratgefäß steht auf der mittels eines elektrischen Heizelementes aufheizbaren Kochplatte, deren Heizleistung mittels einer Steuerschaltung regelbar ist, bei der die Temperatur am oder im Bratgefäß erfasst und zur programmgesteuerten Regelung auf eine vorgebbare Brattemperatur ausgenützt wird. Diese bekannte Anordnung ist speziell für den Bratvorgang in einem Bratgefäß ausgebildet und erfordert die Temperaturerfassung am oder im Bratgefäß. Sie eignet sich daher nicht zu einem standardisierten Garen oder Fertiggaren von Speisen, mit dem sich die vorliegende Erfindung insbesondere befasst.

80 % der Speisen im öffentlichen oder halböffentlichen Bereich fallen unter den heute gängigen Begriff "convenience food", was bedeutet, dass die Lebensmittel vorgefertigt und vor Ort "á la minute" oder auf den Punkt fertiggegart werden. Der Einsatz von Mikrowellengeräten tritt dabei zunehmend in den Hintergrund. Bei dem Garen auf dem Herd sind in der Gastronomie GN-Speisenbehälter hilfreich, die inzwischen auch im Privathaushalt Einzug gehalten haben. In üblichen GN-Speisenbehältern aus rostfreiem Stahlblech lassen sich Speisen aber nicht effizient garen. Deshalb werden solche GN-Speisenbehälter üblicherweise auch nur in Warm- oder Kaltausgaben, also zum Ausgeben von warmen oder gekühlten Speisen eingesetzt, z.B. in der Systemgastronomie. Der Koch oder die Köchin im Privathaushalt ist auf sich gestellt, wenn vorbereitete Speisen (von Rohkost bis zum Fertiggericht) ohne Mikrowelleneinsatz gegart oder vorgegarte Speisen ohne Mikrowelleneinsatz fertiggegart werden sollen. Für einen Speisenlieferanten ist es nämlich schwierig wenn nicht gar unmöglich, der Gastronomie oder dem Privathaushalt Garinformationen für das Garen oder Fertiggaren auf dem Herd mit der vorbereiteten bzw. vorgegarten Speise zu liefern, weil der Gar- oder Fertiggarvorgang wesentlich durch die Art des zum Garen oder Fertiggaren verwendeten Speisenbehälters oder Topfes bestimmt werden wird.

Ein Caterer wird die Speisen soweit vorbereiten, dass sie vor Ort nur noch gegart oder fertigegart zu werden brauchen. Dafür benötigt er aber vor Ort geschultes Kochpersonal, das in der Lage ist, vorgefertigte Speisen tatsächlich á la minute zu garen oder fertig zu garen. Für den Caterer wäre es ökonomischer, wenn er vor Ort ohne geschultes Kochpersonal auskäme.

Das Dokument EP 1 239 705 A1 betrifft ein Warmhaltesystem zum Warmhalten von Speisen durch Umwandlung von mittels induzierter elektromagnetischer Energie entstandener Wärme. Das System beinhaltet ein Gefäß, z.B. ein GN-Gefäß, mit passiven Elementen, die über eine Platte mit aktiven Elementen wirkverbunden sind. Sensoren und eine optimierte Regeleinheit kontrollieren und regeln die Temperatur der sich im Gefäß befindlichen Speisen so, dass diese nicht gegart werden und Energie gezielt zugeführt wird.

Das Dokument WO 2008/017113 A1 betrifft ein Kochsystem, welches einen Speisenbehälter zum Aufnehmen einer Speise umfasst, wobei der Speisenbehälter einen Generator für ein hörbares Signal aufweist, das bei dem Eintritt eines vorbestimmten Ereignisses, wie zum Beispiel der Erzeugung von Gas (zum Beispiel Dampf) erzeugt wird. Das Kochsystem umfasst auch einen Herd mit einem Kochfeld zum Aufnehmen des Speisenbehälters, eine Heizeinrichtung zum Beheizen des Speisenbehälters, einen Sensor zum Erfassen des hörbaren Signals und ein Steuersystem zum Steuern der Heizeinrichtung aufgrund des erfassten Signals. Das Kochsystem ist vorzugsweise ein Induktionssystem, bei dem der Herd (und demgemäß die Heizeinrichtung den Speisenbehälter) durch elektromagnetische Induktion erhitzt.

Das Dokument WO 01/97570 A2 betrifft ein Induktionsheizsystem mit einer Induktionsquelle, einem Heizelement, welches aus der Induktionsquelle beheizt wird, und einer Schaltung, die durch die Induktionsquelle gespeist wird. Die Schaltung kann ein Regler sein, welcher einen Temperatursensor zum Messen einer Temperatur des Heizelements aufweist, und eine Rückführungsschleife, die zwischen dem Temperatursensor und der Induktionsquelle gebildet ist. Das Heizelement kann innerhalb eines Gehäuses angebracht sein, um einen mittels Induktion beheizten Behälter zum Aufnehmen von zu erhitzenden Speisen zu bilden. Ein solcher Behälter kann bei dem kommerziellen Erwärmen und Aufbewahren von Speisen eingesetzt werden.

Aufgabe der Erfindung ist es, eine Kombination aus Kochplatte und Speisenbehälter sowie ein Verfahren der eingangs genannten Art zu schaffen, mit welchen sich vorbereitete Speisen vor Ort á la minute garen oder fertiggaren lassen.

Diese Aufgabe wird durch eine Kombination und ein Verfahren mit den im kennzeichnenden Teil der Ansprüche 1 und 7 angegebenen Merkmalen bzw. Schritten gelöst.

Bei der Kombination nach der Erfindung ist die Steuerschaltung der Kochplatte einfach auf mehrere Heizleistungsstufen mit zugeordneter Beheizungszeit oder -zeitkombination vorprogrammierbar oder vorprogrammiert, die auf einen für den Einsatz bei der Kochplatte bestimmten GN-Speisenbehälter abgestimmt sind und in Abhängigkeit von einer auf der Kochplatte zu garenden oder fertig zu garenden Speise einzeln oder in Kombination und mit zugeordneter oder wählbarer Beheizungszeit oder-zeitkombination ausgewählt werden. Dabei ließe sich zwar auch ein GN-Speisenbehälter aus dem üblichen rostfreien Stahlblech einsetzen, da in einem solchen Behälter jedoch kein effizienter Garprozess erzielbar ist, werden die Heizleistungsstufen nebst zugeordneten Beheizungszeiten oder -zeitkombinationen auf einen GN-Speisenbehälter aus einem induktionsfähigen metallischen Mehrschichtmaterial oder einem anderen induktionsfähigen Material abgestimmt, in dem dann im Idealfall die Speisen in vorbereitetem Zustand (wie zum Beispiel Rohkost) oder gleich vorgegart oder im vorgegarten Zustand geliefert werden. Ein GN-Speisenbehälter aus einem induktionsfähigen metallischen Mehrschichtmaterial, der ein effizientes Garen wie ein Kochtopf ermöglicht, ist zum Beispiel aus der auf den Anmelder zurückgehenden Patentschrift EP 1 833 341 B1 bekannt. Ein GN-Speisenbehälter dieser Art wird von der Rieber GmbH & Co. KG, D-72770 Reutlingen, unter deren Marke thermoplate^{®} auf den Markt gebracht. In einem solchen GN-Speisenbehälter kann dann auf der Kochplatte der Kombination nach der Erfindung auf dem Küchentisch, im Besprechungsraum oder in der Schulkantine die Speise auf den Punkt gegart oder fertig gegart werden. Dadurch sind Speisen in einer Qualität erzielbar, die zum Beispiel durch das Erwärmen von vorgefertigten Speisen in einem Mikrowellengerät nicht erzielbar ist. Die auf den Standardspeisenbehälter im GN-Format sowohl in der Größe als auch in der Heizleistung und Beheizungszeit oder -zeitkombination abgestimmte Kochplatte der Kombination nach der Erfindung ermöglicht das Erzielen von wiederholbaren Garergebnissen bester Qualität. Dafür braucht der Benutzer der Kochplatte nach der Erfindung lediglich den betreffenden GN-Speisenbehälter auf die Kochplatte zu stellen und einen zum Beispiel in der Garinformation angegebenen Knopf zu drücken. Den Rest erledigt das Tischkochgerät der Kombination nach der Erfindung mit seiner vorprogrammierten Steuerung automatisch. Der Caterer kann vor Ort ohne geschultes Kochpersonal auskommen. Er braucht seinem Personal vor Ort lediglich die Garinformation zu liefern, nach welcher die entsprechende Garstufe an dem Tischkochgerät auszuwählen ist, damit das Essen vor Ort auf den Punkt gegart oder fertig gegart werden kann. Ein entsprechender Vorteil bietet sich im Privathaushalt, denn das Essen, das dort vorbereitet oder vorgegart oder von außerhalb vorbereitet oder vorgegart geliefert worden ist, braucht lediglich, wenn es nicht bereits in dem geeigneten GN-Speisenbehälter vorgegart oder angeliefert worden ist, in einen solchen Behälter umgefüllt zu werden, der dann auf das Tischkochgerät gestellt wird, damit die Speise fertiggegart und so ein Essen von hoher Qualität zubereitet werden kann. Ebenso können Angestellte im halböffentlichen Bereich ihre Speisen am gemeinsamen Mittagstisch wie zu Hause genießen. Im privaten Bereich kann vorgegart angeliefertes Essen auf Knopfdruck fertig zubereitet werden. Zusammenfassend lässt sich feststellen, dass mit dem Tischkochgerät Grundbedürfnisse des Menschen wie Mobilität, Gesundheit, Genuss, Energieeffizienz, Sicherheit und Tradition befriedigt werden.

Es versteht sich, dass das Vorprogrammieren der Heizstufen mit fest zugeordneter Beheizungszeit den Einsatz eines bestimmten standardisierten GN-Speisenbehälters aus einem bestimmten Material zur Voraussetzung hat. Anderenfalls wäre die Automatisierung des Gar- oder Fertiggarvorganges mit der Kochplatte der erfindungsgemäßen Kombination nicht möglich. Die Erfindung schafft somit neben dem standardisierten Tischkochgerät zugleich auch einen Standard für einen GN-Speisenbehälter, der ein effizientes Garen oder Fertiggaren von Speisen auf dem Tischkochgerät erlaubt. Dabei sei beachtet, was hier mit Standard tatsächlich gemeint ist. Der GN-Speisenbehälter an sich entspricht bereits einem Standard, nämlich der Gastro-Norm. Erfindungsgemäß kommt hier noch ein besonderer Standard hinzu, nämlich das Material und die Größe des GN-Speisenbehälters. Darüber hinaus schafft die Erfindung auch noch einen weiteren Standard in Bezug auf die Kochplatte, bei der die Größe, die Heizleistung und die Beheizungszeit oder -zeitkombination, die ausgewählt werden können, vorgegeben und dem Koch bekannt sind, der Speisen im Cateringbereich, in der Gastronomie oder im Privathaushalt vorbereitet oder vorgart. Der Koch ist somit in der Lage, die für das Garen oder Fertiggaren erforderliche Heizleistungsstufe mit fest zugeordneter oder wählbarer Beheizungszeit oder -zeitkombination vorzugeben, mit welcher die Speise dann auf Knopfdruck fertig zubereitet werden kann. Die auf das GN-Format der Kochplatte abgestimmte Größe des GN-Speisenbehälters oder der GN-Speisenbehälter und das besondere Material, aus dem dieser (diese) hergestellt ist (sind), machen aus dem GN-Speisenbehälter einen standardisierten funktionsfähigen Kochtopf und gewährleisten, dass mit der Kochplatte der Kombination nach der Erfindung das angestrebte Ziel mit besten Ergebnissen erreicht wird.

Bei dem Verfahren nach der Erfindung werden die Heizleistungsstufe und die Beheizungszeit oder -zeitkombination in der Garinformation abgestimmt auf das Material, aus dem der GN-Speisenbehälter besteht, und in Abhängigkeit von der in dem Behälter enthaltenen Speise festgelegt. Dieses Festlegen kann vorab erfolgen, so dass vor Ort anhand der Garinformation lediglich der entsprechende Knopf an dem Tischkochgerät gedrückt zu werden braucht, um eine Speise auf den Punkt zu garen oder fertig zu garen oder dass vor Ort lediglich die Garinformation durch das Tischkochgerät eingelesen zu werden braucht, um eine Speise dann automatisch auf den Punkt zu garen oder fertig zu garen.

Zum Abstimmen auf besondere Eigenschaften des eingesetzten GN-Speisenbehälters und den besonderen Zustand der darin enthaltenen Speise ist bei der Kochplatte der Kombination nach der Erfindung vorgesehen, dass die Beheizungszeit oder -zeitkombination wählbar statt fest zugeordnet ist und/oder dass die Kochplatte im unprogrammierten Zustand geliefert und vom Koch selbst nach seinem Bedarf vorprogrammiert wird. Das üblicherweise aber erfolgende Vorprogrammieren von mehreren Heizleistungsstufen mit fest zugeordneten Beheizungszeiten oder -zeitkombinationen erfolgt in Zusammenarbeit mit dem Koch, der die Speise vorfertigt und weiß, welche Heizleistungsstufe und Beheizungszeit oder -zeitkombination ein Fertiggaren auf den Punkt mit dem Tischkochgerät ermöglichen.

In einer Ausgestaltung der Erfindung ist die Steuerschaltung zu einer Temperaturregelschaltung ausgebaut oder mit einer übergeordneten Temperaturregelschaltung verbunden. Diese Ausgestaltung der Kochplatte der Kombination nach der Erfindung ist zwar in der Herstellung teuerer, ermöglicht aber noch effizientere und bessere Garergebnisse. Das Ausbauen der Steuerschaltung wird wie üblich durch Hinzufügen wenigstens eines Temperatursensors zum Erfassen der Heiz- oder Garguttemperatur und das Vorsehen eines Soll-Isfinrert-Vergleiches und entsprechendes Schließen des Steuerkreises zu einem Regelkreis erreicht werden. Stattdessen könnte die Steuerschaltung einfach auch mit einer Temperaturregelschaltung verbunden werden, die eine Temperaturregelung zusätzlich zu der Steuerung der Heizleistung und der Beheizungszeit oder -zeitkombination vornimmt.

In einer weiteren Ausgestaltung der Erfindung ist die elektrische Heizeinrichtung so schaltbar, dass das Kochfeld in GN-Bruchteilen des GN-Formats der Kochplatte beheizbar ist. Das ermöglicht, nur einen Teil des Kochfeldes einzusetzen, wenn wegen einer geringen Speisemenge der Einsatz eines kleineren GN-Behälters zweckmäßig erscheint. Das Kochfeld kann beispielsweise innerhalb des Rahmens das GN-Format 2/3 haben. Wenn das Kochfeld hälftig unterteilt wäre, ließen sich zwei Speisenbehälter des Formats 1/3 gleichzeitig oder alternativ einsetzen. Ebenso wäre es möglich, auf einem Kochfeld des GN-Formats 2/3 auf einer Hälfe nebeneinander zwei GN-Speisenbehälter der Größe 1/6 und auf der anderen Hälfte drei GN-Speisenbehälter jeweils der Größe 1/9 einzusetzen (vgl. hierzu EN 631-1: 1992, S. 4, Bild 1). Die Heizeinrichtung ist dabei zweckmäßig so schaltbar, dass das Kochfeld nur an den Stellen beheizt wird, wo sich die vorgenannten oder einer der vorgenannten GN-Speisenbehälter innerhalb des Rahmens der Kochplatte befinden.

In einer weiteren Ausgestaltung der Erfindung weist die Betätigungseinrichtung der Kochplatte eine mit der Steuerschaltung verbundene Leseeinheit zum berührungslosen Lesen von Garinformation auf, die in einem an dem GN-Speisenbehälter angebrachten Etikett und/oder RFID-Transponder enthalten ist. Der Benutzer der Kochplatte nach der Erfindung braucht somit lediglich den GN-Speisenbehälter mit dem Etikett oder RFID-Transponder vor die Leseeinheit der Kochplatte zu stellen, damit die Garinformation berührungslos eingelesen werden kann, die in dem Etikett und/oder RFID-Transponder enthalten ist, mit dem der GN-Speisenbehälter versehen ist. Das und den Rest erledigt die Kochplatte der Kombination nach der Erfindung automatisch. Als berührungslos lesbares Etikett wird bei der Kochplatte der Kombination nach der Erfindung bevorzugt zwar ein wiederbeschreibbarer Datenträger verwendet, es könnte jedoch auch ein Barcode-Etikett eingesetzt werden, das nur für den Einmalgebrauch bestimmt ist. Statt des berührungslos lesbaren Etiketts, das außen an dem GN-Speisenbehälter angebracht wird, kann ein solches Etikett bereits bei der Herstellung desselben in den GN-Speisenbehälter integriert werden (sogenanntes Source Tagging). Statt eines solchen Etiketts oder zusätzlich zu einem solchen Etikett kann ein RFID-Transponder eingesetzt werden, in den die Garinformation einprogrammierbar ist. Die RFID-Transpondertechnik ist bereits so allgemein bekannt, dass sich eine nähere Beschreibung erübrigt. Wenn das Etikett oder der RFID-Transponder in den GN-Speisenbehälter integriert wird, erfolgt das bevorzugt im oder am Boden desselben. Die Leseeinheit kann in diesem Fall in dem Gehäuse der Kochplatte unter dem Kochfeld angeordnet sein, so dass der GN-Speisenbehälter lediglich auf die Kochplatte gestellt zu werden braucht. Die Garinformation wird dann selbsttätig durch die Leseeinheit der Kochplatte ausgelesen, wodurch Bedienungsfehler absolut ausgeschlossen sind, verglichen mit dem Fall, in welchem die Leseeinheit in die Seitenwand des Gehäuses der Kochplatte eingelassen ist und der GN-Speisenbehälter, der ein Etikett auf oder in der Seitenwand oder einen RFID-Transponder in der Seitenwand trägt, vor die Leseeinheit gestellt werden muss, damit die Garinformation eingelesen wird, bevor der GN-Speisenbehälter auf die Kochplatte gestellt wird. Als Leseeinheit für ein die Garinformation tragendes Etikett, das außen an dem GN-Speisenbehälter angebracht ist, könnte ein optischer Scanner eingesetzt werden, wie er zum Lesen von Barcodes üblicherweise eingesetzt wird.

In einer weiteren Ausgestaltung der Erfindung ist das andere induktionsfähige Material ein mit induktionsfähigem Material beschichtetes oder versetztes Keramikmaterial. In diesem Fall kann der GN-Speisenbehälter aus einem Keramikmaterial bestehen, das mit Partikeln aus induktionsfähigem Werkstoff versetzt ist oder das mit einem induktionsfähigen Material, das solche Partikel enthält, beschichtet ist. Versuche haben gezeigt, dass es ausreicht, wenn der Boden eines GN-Speisenbehälters aus Keramikmaterial an der Unterseite mit induktionsfähigem Material beschichtet ist. Ein solches Keramikmaterial ist an sich bekannt.

Zu Regelzwecken kann in den GN-Speisenbehälter ein RFID-Transponder integriert sein. Dieser Transponder ist Teil einer in das Material des Speisenbehälters integrierten Sende- und/oder Empfangseinrichtung für wenigstens eine Temperaturinformation. Ein solcher GN-Speisenbehälter bildet den Gegenstand des auf den Anmelder zurückgehenden Patents DE 10 2005 048 406 B4. Dieser GN-Speisenbehälter eignet sich insbesondere zur Verwendung in der Ausgestaltung der Erfindung, in welcher die Steuerschaltung zu einer Temperaturregelschaltung ausgebaut oder mit einer übergeordneten Temperaturregelschaltung verbunden ist. Der RFID-Transponder erfüllt in diesem Fall die Funktion des Temperatursensors und die Funktion des Trägers der Garinformation. Die Sende- und/oder Empfangseinrichtung des Transponders oder Temperatursensors kann dabei wie dieser in die Wand des GN-Speisenbehälters integriert sein wie bei dem GN-Behälter nach dem vorerwähnten Patent DE 10 2005 048 406 B4.

In einer weiteren Ausgestaltung der Erfindung hat der GN-Speisenbehälter einen auf das GN-Format desselben abgestimmten Deckel, der zusätzlich zu dem GN-Speisenbehälter oder statt desselben mit einem berührungslos lesbaren und Garinformation aufnehmenden oder enthaltenden Etikett und/oder RFID-Transponder versehen ist. In dieser Ausgestaltung kann somit der GN-Speisenbehälter und/oder dessen Deckel die Garinformation tragen. Das kann zweckmäßig sein, um zum Beispiel den Einlesevorgang zu erleichtern. In dieser Ausgestaltung erfüllt der RFID-Transponder die Funktion des berührungslos lesbaren Etiketts und nicht die Funktion des Temperatursensors.

In einer Ausgestaltung der Erfindung beinhaltet der Schritt des Bereitstellens von Garinformation für das Garen oder Fertiggaren der Speise, die für das Garen oder Fertiggaren der Speise bestimmte Garinformation in einem an dem GN-Speisenbehälter angebrachten oder in den GN-Speisenbehälter integrierten berührungslos lesbaren Etikett und/oder RFID-Transponder bereitzustellen, und der Schritt des Garens oder Fertiggarens der Speise in dem GN-Speisenbehälter auf der Kochplatte der Kombination nach der Erfindung beinhaltet, das Garen oder Fertiggaren mit durch die aus dem Etikett und/oder dem RFID-Transponder ausgelesener Garinformation vorgegebener Heizleistungsstufe und Beheizungszeit oder -zeitkombination durchzuführen. Auf diese Weise lassen sich Bedienungsfehler, die durch manuelles Eingeben der Garinformation verursacht werden können, ausschließen.

Ausführungsbeispiele der Erfindung werden im Folgenden unter Bezugnahme auf die beigefügten Zeichnungen näher beschrieben. Es zeigt
- Fig. 1: in perspektivischer Darstellung ein erstes Ausführungsbeispiel einer Kombination nach der Erfindung aus einer Kochplatte und einem Speisenbehälter, der hier mit einem auf ihn abgestimmten Deckel versehen ist,
- Fig. 2: als eine Einzelheit die Kochplatte nach Fig. 1, wobei ein Kochfeld abgehoben von der Kochplatte dargestellt ist, um eine unter dem Kochfeld befindliche elektrische Heizeinrichtung sichtbar zu machen,
- Fig. 3: ein Diagramm mit Heizleistungskurven der Kochplatte nach den Fig. 1 und 2,
- Fig. 4: ein zweites Ausführungsbeispiel einer Kombination nach der Erfindung aus einer Kochplatte und einem Speisenbehälter, wobei zusätzlich die Kochplatte mit einer Leseeinheit und der Speisenbehälter mit einem Etikett versehen ist, das eine Garinformation enthält, welche durch die Leseeinheit ablesbar ist,
- Fig. 5: ein drittes Ausführungsbeispiel einer Kombination nach der Erfindung aus einer Kochplatte und einem Speisenbehälter, wobei eine Betätigungseinrichtung der Kochplatte statt mehrerer Tasten wie in Fig. 4 einen versenkbaren einzelnen Drehregler umfasst und der Speisenbehälter in einer Position ist, in welcher die Garinformation gelesen wird, und
- Fig. 6: ein viertes Ausführungsbeispiel einer Kombination nach der Erfindung aus einer Kochplatte und einem Speisenbehälter, wobei aber die Leseeinheit unterhalb des Kochfeldes in die Kochplatte integriert ist.

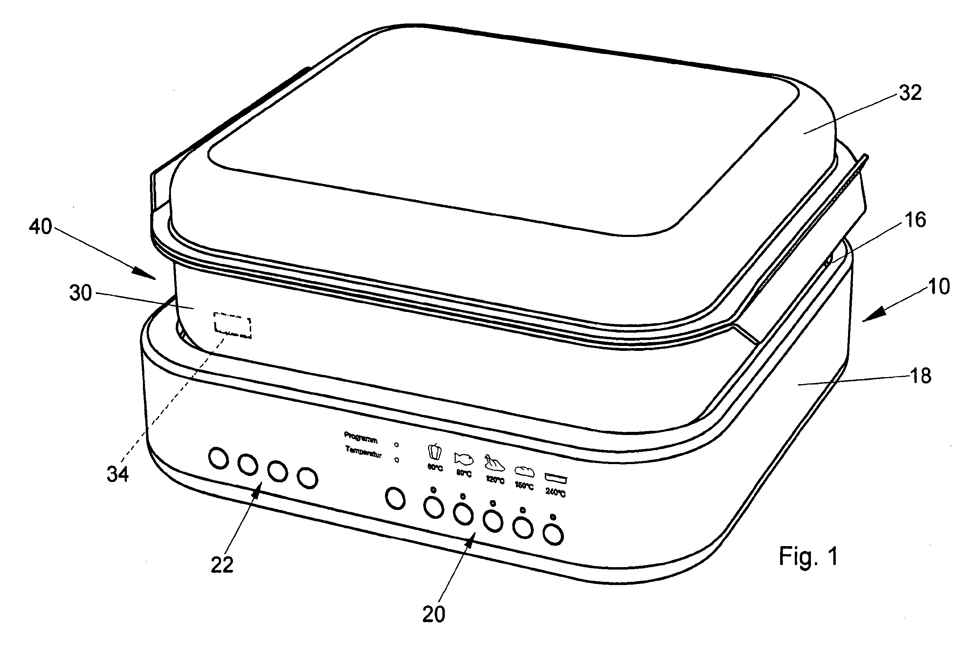

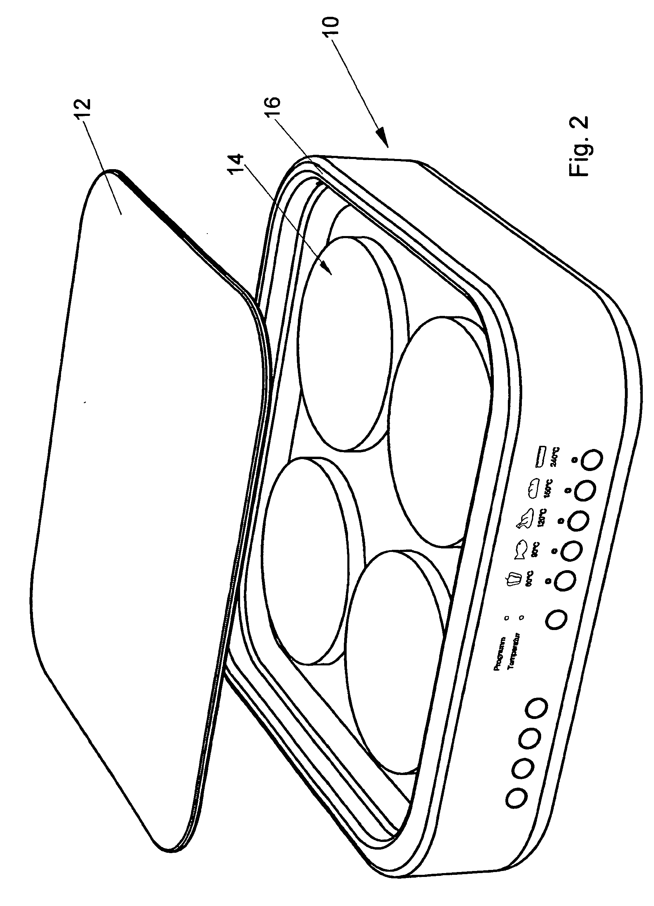

Eine in den Fig. 1 und 2 jeweils insgesamt mit 10 bezeichnete Kochplatte hat ein Kochfeld 12, das zum Beispiel eine Ceranplatte sein kann, unter der eine in Fig. 2 insgesamt mit 14 bezeichnete elektrische Heizeinrichtung angeordnet ist. Um das Kochfeld 12 ist ein Rahmen 16 angeordnet. Die Kochplatte 10 hat ein Gehäuse 18, dessen oberer Rand den Rahmen 16 bildet. Die Kochplatte 10 hat eine in dem Gehäuse 18 unterhalb der Heizeinrichtung 14 angeordnete Steuerschaltung (in den Fig. 1 und 2 nicht sichtbar), die zu einer Temperaturregelschaltung ausgebaut oder mit einer übergeordneten Temperaturregelschaltung (nicht dargestellt) verbunden sein kann.

Die Kochplatte 10 hat eine insgesamt mit 20 bezeichnete Betätigungseinrichtung zum Auswählen von einzelnen Heizleistungsstufen, was weiter unten noch näher erläutert ist. Die Betätigungseinrichtung 20 ist schematisch durch sechs Tasten dargestellt. Mit der linken Taste lässt sich zwischen "Programm" und "Temperatur" umschalten. Mit den rechten fünf Tasten lassen sich, wenn auf "Temperatur" umgeschaltet ist, verschiedene Temperaturen auswählen, die in Fig. 1 beispielshalber angegeben sind. Wenn auf "Programm" umgeschaltet ist, lassen sich mit denselben fünf Tasten fünf verschiedene Programmstufen auswählen, die bestimmten Heizleistungsstufen der Heizeinrichtung 14 entsprechen und mit den Symbolen für Gemüse, Fisch, Fleisch, Brot bzw. Grill bildlich symbolisiert sind.

Gemäß der Darstellung in Fig. 2 weist die Heizeinrichtung 14 vier kreisförmige Heizmodule 14a - 14d auf, bei denen es sich um Strahlungs- und/oder Induktionsheizmodule handeln kann. Für die Heizmodule 14a - 14d ist noch eine zusätzliche Betätigungseinrichtung 22 vorhanden, die durch vier weitere Tasten angedeutet ist. Mit der Betätigungseinrichtung 22 lassen sich beispielsweise die vier Heizmodule 14a - 14d jeweils gesondert oder gemeinsam ein- und ausschalten. Der Rahmen hat innen eine Schulter 24 als Auflage für das Kochfeld 12. Wenn sich das Kochfeld 12 auf der Schulter 24 befindet, befindet es sich unmittelbar oberhalb der Heizmodule 14a - 14d.

Die Kochplatte 10 ist als ein auf die Größe eines GN-Speisenbehälters 30 abgestimmtes Tischkochgerät ausgebildet. Mit Tischkochgerät ist gemeint, dass die Kochplatte überall dort, wo Speisen gegart oder fertig gegart werden sollen, einfach auf den Tisch gestellt werden kann, sei es in der Gastronomie, bei einem Büfett, im Büro, in der Schule oder im privaten Bereich. Ein Netzanschlusskabel der Kochplatte 10 ist in den Fig. 1 und 2 der Einfachheit halber nicht dargestellt.

Bei dem hier als Beispiel dargestellten GN-Speisenbehälter 30 handelt es sich um einen Speisenbehälter in dem GN-Format 2/3. Der GN-Speisenbehälter 30 könnte durch zwei jeweils halb so große GN-Speisenbehälter des GN-Formats 1/3 ersetzt werden. Jeder GN-Speisenbehälter des Formats 1/3 könnte dann durch zwei der vier Heizmodule 14a -14d beheizt werden. Wenn vier GN-Speisenbehälter des Formats 1/6 verwendet werden, könnte jeder dieser Behälter durch eines der Heizmodule 14a - 14d beheizt werden.

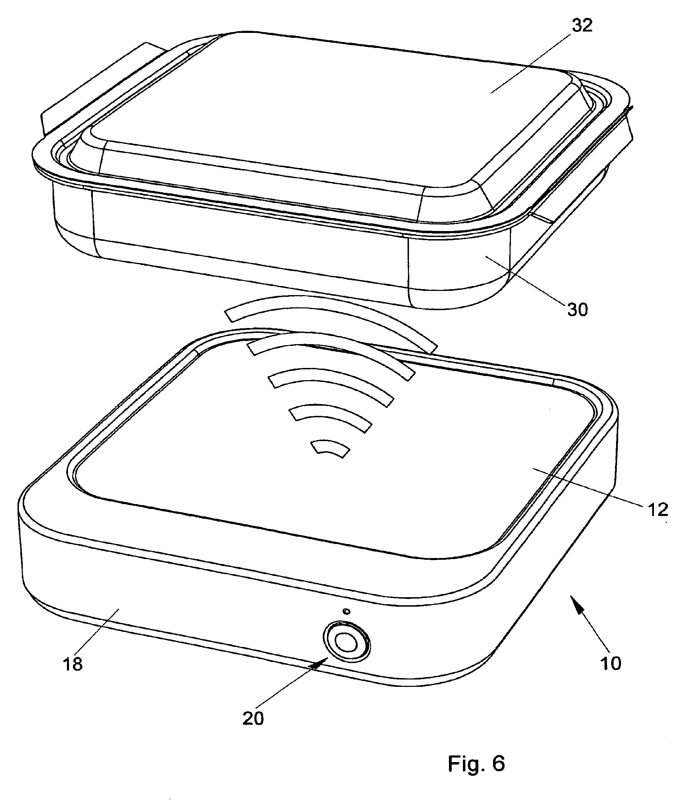

In dem hier dargestellten Ausführungsbeispiel trägt der GN-Speisenbehälter 30 einen auf sein GN-Format abgestimmten Deckel 32. Der GN-Speisenbehälter 30 besteht vorzugsweise aus einem induktionsfähigen metallischen Mehrschichtmaterial oder aus einem anderen induktionsfähigen Material, so dass er durch die Heizeinrichtung 14 auf jeden Fall beheizbar ist, ungeachtet dessen, ob es sich um eine Strahlungsheizeinrichtung oder um eine induktive Heizeinrichtung handelt. Ein anderes induktionsfähiges Material, das für den GN-Speisenbehälter geeignet wäre, wäre ein mit induktionsfähigem Material beschichtetes oder versetztes Keramikmaterial. Der Deckel 32 kann aus dem gleichen Material wie der GN-Speisenbehälter 30 bestehen, besteht aber vorzugsweise aus hitzebeständigem Glas oder Kunstglas. In den GN-Speisenbehälter 30 kann ein RFID-Transponder 34 integriert sein, wie er in Fig. 1 in der Wand des GN-Speisenbehälters gestrichelt angedeutet ist. Der RFID-Transponder 34 könnte sich statt in der Wand des GN-Speisenbehälters 30 auch in dessen Boden befinden wie in dem Ausführungsbeispiel nach Fig. 6.

Die Kochplatte 10 und der GN-Speisenbehälter 30 sind auf einander abgestimmt und bilden eine in Fig. 1 insgesamt mit 40 bezeichnete Kombination, die insbesondere zur Durchführung eines erfindungsgemäßen Verfahrens zum Garen oder Fertiggaren von Speisen bestimmt ist, das weiter unten ausführlicher beschrieben ist.

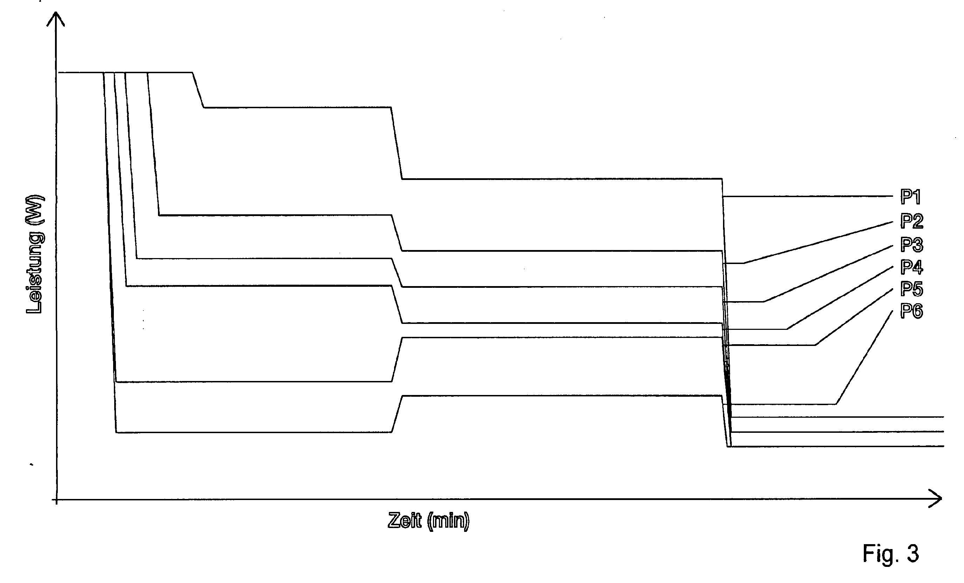

Durch Steuern der elektrischen Heizeinrichtung 14 mit Hilfe der Steuerschaltung lässt sich die Heizleistung der Kochplatte 10 wenigstens in Abhängigkeit von der Art einer Speise, die sich in dem auf die Kochplatte zu stellenden oder in dem auf der Kochplatte stehenden GN-Speisenbehälter 30 befindet, beeinflussen. Die bei der Kochplatte 10 nach den Fig. 1 und 2 dafür vorgesehene Steuerschaltung ist auf mehrere Heizleistungsstufen P1 - P6 (Fig. 3) mit jeweils fest zugeordneter oder wählbarer Beheizungszeit oder -zeitkombination vorprogrammierbar oder vorprogrammiert. Die einzelnen Stufen sind dabei auf das Material, aus dem der einzusetzende GN-Speisenbehälter 30 besteht, abgestimmt und die Stufen sind in Abhängigkeit von einer auf der Kochplatte 10 zu garenden oder fertigzugarenden Speise einzeln oder in Kombination und mit zugeordneter oder wählbarer Beheizungszeit oder -zeitkombination auswählbar. Eine dafür geeignete Steuerschaltung kann der einschlägige Fachmann auf einfache Weise entwerfen und vorprogrammieren und braucht daher hier weder dargestellt noch näher beschrieben zu werden. Die Steuerschaltung wird durch die Tasten der Betätigungseinrichtung 20 auf die weiter oben bereits beschriebene Art und Weise angesteuert. Wenn zum Beispiel auf "Programm" umgeschaltet und die Programmstufe "Fleisch" gewählt wird, ist es mit Hilfe der Steuerschaltung zum Beispiel möglich, die Heizleistung des Kochfeldes 12 auf die höchste Stufe hochzufahren und bei dieser Heizleistung Fleisch für 2 Minuten anzubraten, danach auf die nächst niedrigere Heizstufe umzuschalten, auf dieser das Fleisch für 5 Minuten weiter zu garen und danach auf eine niedrigste Stufe zurückzuschalten, um das Fleisch nur noch warm zu halten. Nach Bedarf lassen sich Kombinationen aus verschiedenen Beheizungszeiten und Heizstufen vorprogrammieren und/oder auswählen.

Fig. 3 zeigt ein Diagramm mit sechs beispielshalber gezeigten Heizleistungskurven entsprechend den Heizleistungsstufen P1 - P6.

Wenn das Kochfeld 12 hälftig unterteilt ist, lässt sich mit der einen Hälfte der Heizeinrichtung 14 eine Speise in einem GN-Speisenbehälter 30, der halb so groß wie der in Fig. 1 gezeigte Speisenbehälter ist, garen oder zubereiten, während auf der anderen Hälfte des Kochfeldes 12 mit einer anderen Temperatur in einem ebenso großen weiteren Speisenbehälter eine andere Speise zubereitet wird.

Wenn die Kochplatte 10 auf "Temperatur" umgeschaltet ist, lassen sich verschiedene Temperaturen (in Fig. 1 beispielshalber angegeben mit 60°C, 90°C, 120°C, 150°C, 240°C) und somit verschiedene Garprogramme manuell auswählen und durchführen, wie es eingangs bereits beschrieben ist. Die den Heizleistungsstufen P1 - P6 zugeordneten Beheizungszeiten oder -zeitkombinationen können gemeinsam oder gesondert oder nur alternativ ausgewählt werden, je nach Bedarf. Die Steuerschaltung kann unter Einbeziehung des RFID-Transponders 34 zu einer Temperaturregelschaltung ausgebaut oder mit einer übergeordneten Temperaturregelschaltung verbunden sein, was für den Fachmann auch ohne weiteres je nach Bedarf realisierbar ist, so dass es auch hierfür keiner näheren Beschreibung bedarf.

Die Kochplatte 10 wird als ein Standardprodukt hergestellt, für das die Heizleistungsstufen nebst zugeordneten oder wählbaren Beheizungszeiten oder -zeitkombinationen ebenfalls standardisiert werden. Der GN-Speisenbehälter 30, der zum Einsatz kommt, ist ebenfall standardisiert, so dass mit der Kombination 40 aus der Kochplatte 10 und dem GN-Speisenbehälter 30 das erfindungsgemäße Verfahren zum Garen oder Fertiggaren von Speisen in folgenden Schritten durchgeführt werden kann:
- Bereitstellen eines GN-Speisenbehälters 30, der eine vorbereitete, insbesondere vorgegarte Speise enthält,
- Bereitstellen von Garinformation für das Garen oder Fertiggaren der Speise und
- Garen oder Fertiggaren der Speise in dem GN-Speisenbehälter 30 auf der Kochplatte 10 mit durch die Garinformation vorgegebener Heizleistungsstufe und Beheizungszeit oder -zeitkombination.

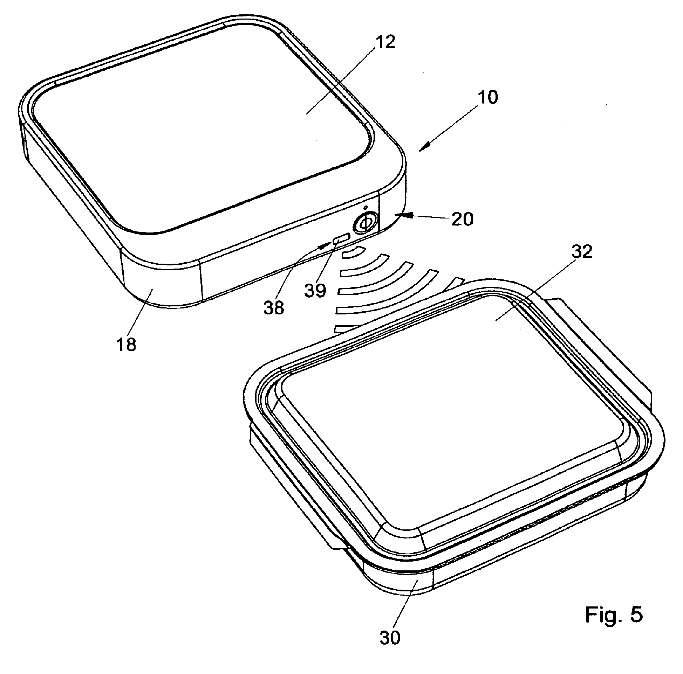

Die auf den Standard-GN-Speisenbehälter 30 und auf die in diesem enthaltene Speise abgestimmte Garinformation ermöglicht, das erfindungsgemäße Verfahren auf der Standard-Kochplatte 10 durch Knopfdruck nach den Fig. 1 und 2 oder durch Einstellen eines Drehreglers nach den Fig. 5 und 6 auszuführen und so die in dem GN-Speisenbehälter 30 enthaltene Speise auf den Punkt zu garen oder fertig zu garen.

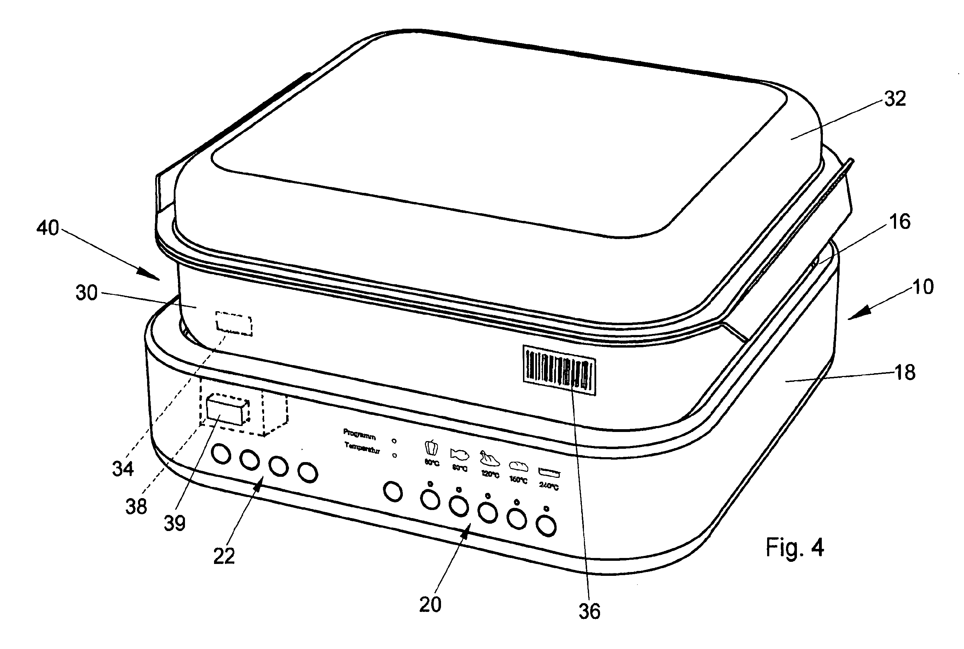

Da sich bei der Kombination aus Kochplatte und GN-Speisenbehälter nach den Fig. 1 und 2 bei dem manuellen Eingeben der Garinformation in die Kochplatte 10 mittels Tasten oder Drehregler Bedienungsfehler nicht völlig ausschließen lassen, ist bei der Kochplatte 10 nach den Fig. 4 bis 6, auf die nun Bezug genommen wird, zusätzlich (oder alternativ, was nicht dargestellt ist) eine berührungslose Eingabe der Garinformation in die Kochplatte 10 vorgesehen.

Die Kochplatte 10 nach Fig. 4 hat den gleichen Aufbau wie die Kochplatte 10 nach den Fig. 1 und 2, weist aber als einen zusätzlichen (oder alternativen) Teil der Betätigungseinrichtung eine mit der Steuerschaltung verbundene Leseeinheit 38 zum berührungslosen Lesen von Garinformation auf, die in einem Etikett 36 und/oder in dem RFID-Transponder 34 enthalten ist. In dem Ausführungsbeispiel nach Fig. 4 ist das Etikett 36 ein Barcode-Etikett. Die darin enthaltene Garinformation könnte zusätzlich oder stattdessen in dem RFID-Transponder 34 enthalten sein, der in diesem Fall nur die Funktion erfüllt, eine auslesbare Garinformation bereitzustellen, nicht aber die Funktion einer Sende-Empfangseinrichtung für Temperaturinformation. Wenn auch diese Funktion benötigt wird, wird zweckmäßig ein zusätzlicher RFID-Transponder für diesen Zweck vorgesehen. Die Leseeinheit 38 ist in Fig. 4 schematisch als ein in die Wand des Gehäuses 18 der Kochplatte 10 eingelassener Scanner mit einem Fenster 39 dargestellt, mit welchem die in dem Etikett 36 enthaltene Garinformation berührungslos auslesbar ist, wenn sich der GN-Speisenbehälter 30 in einer in Fig. 5 dargestellten Position gegenüber dem Fenster 39 befindet.

Die Ausbildung der Kochplatte 10 nach Fig. 5 unterscheidet sich von der Ausbildung der Kochplatte 10 nach Fig.1 im Wesentlichen dadurch, dass die Betätigungseinrichtung 20 mit einem in dem Gehäuse 18 versenkbaren Drehregler versehen ist und dass die Betätigungseinrichtung 22 zum Ein- und Ausschalten von Heizmodulen weggelassen worden ist. Diese Funktion kann bei Bedarf durch den Drehregler zusätzlich erfüllt werden.

Bei den Ausführungsbeispielen nach den Fig. 4 bis 6 kann der Deckel 32 zusätzlich zu dem GN-Speisenbehälter 30 oder statt desselben mit einem berührungslos lesbaren und Garinformatin aufnehmenden oder enthaltenden Etikett 36 (nicht dargestellt) und/oder RFID-Transponder (nicht dargestellt) versehen sein.

Bei den Ausführungsbeispielen nach den Fig. 4 und 5 braucht die Garinformation zwar nicht mehr von Hand in die Kochplatte eingegeben zu werden, der GN-Speisenbehälter 30 muss jedoch nach dem Einlesen der Garinformation auf das Kochfeld 12 gestellt werden. Dadurch können Bedienungsfehler auch in diesem Fall nicht gänzlich ausgeschlossen werden.

Zum völligen Ausschließen von Bedienungsfehlern ist bei der Ausgestaltung der Kochplatte 10 nach Fig. 6 die Leseeinheit (nicht dargestellt) in dem Gehäuse 18 der Kochplatte 10 unterhalb des Kochfeldes 12 und zweckmäßig unterhalb der elektrischen Heizeinrichtung 14 angeordnet. Das berührungslos lesbare Etikett oder ein RFID-Transponder ist in diesem Fall zweckmäßig in den Boden des GN-Speisenbehälters 30 integriert. Die Garinformation wird aus dem Etikett oder RFID-Transponder ausgelesen, während der GN-Speisenbehälter 30 auf die Kochplatte 10 gestellt wird oder schließlich auf der Kochplatte 10 steht, wie es in Fig. 6 dargestellt ist. Das Einlesen der Garinformation und das Starten des Heizprogramms erfolgen in diesem Fall völlig selbsttätig, so dass Bedienungsfehler völlig ausgeschlossen sind.

Das erfindungsgemäße Verfahren zum Garen oder Fertiggaren von Speisen kann in den Ausführungsbeispielen nach den Fig. 4 bis 6 in folgenden Schritten durchgeführt werden:
- Bereitstellen eines GN-Speisenbehälters 30, der eine vorbereitete, insbesondere vorgegarte Speise enthält,
- Bereitstellen von für das Garen oder Fertiggaren der Speise bestimmter und in einem an dem GN-Speisenbehälter 30 angebrachten oder in den GN-Speisenbehälter 30 integrierten, berührungslos lesbaren Etikett 36 und/oder RFID-Transponder 34 (oder einem zusätzlichen, nicht dargestellten RFID-Transponder) enthaltener Garinformation und
- Garen oder Fertiggaren der Speise in dem GN-Speisenbehälter 30 auf der Kochplatte 10 mit durch die aus dem Etikett 36 und/oder dem RFID-Transponder 34 (oder dem zusätzlichen RFID-Transponder) ausgelesener Garinformation vorgegebener Heizleistungsstufe und Beheizungszeit oder -zeitkombination.

Die Garinformation kann beinhalten, dass eine der Heizleistungskurven der Heizleistungsstufen P1 - P6 nach Fig. 3 ausgewählt wird. Bei den Heizleistungskurven nach Fig. 3 wird mit einer sich an die eigentliche Heizperiode anschließenden Warmhaltephase gearbeitet. Solche Heizleistungskurven kann der Caterer bei Bedarf nach eigenen Bedürfnissen festlegen und in die Steuerung der Kochplatte 10 einprogrammieren.

### Bezugszeichenliste

- 10: Kochplatte
- 12: Kochfeld
- 14: elektrische Heizeinrichtung
- 14a - 14d: Heizmodule
- 16: Rahmen
- 18: Gehäuse
- 20: Betätigungseinrichtung
- 22: Betätigungseinrichtung
- 24: Schulter
- 30: GN-Speisenbehälter
- 32: Deckel
- 34: RFID-Transponder
- 36: Etikett
- 38: Leseeinheit
- 39: Fenster
- 40: Kombination
- P1 - P6: Heizleistungsstufen

## Patentansprüche

1. Kombination aus einer Kochplatte (10) und einem Speisenbehälter, wobei die Kochplatte (10) mit einem Kochfeld (12) mit einer induktiven elektrischen Heizeinrichtung (14) und einer Steuerschaltung zum Beeinflussen wenigstens der Heizleistung der Kochplatte (10) wenigstens in Abhängigkeit von der Art einer Speise, die sich in einem auf die Kochplatte (10) zu stellenden Speisenbehälter befindet, versehen ist,
wobei die Kochplatte (10) als ein auf die Größe eines GN-Speisenbehälters (30) abgestimmtes Tischkochgerät ausgebildet ist,
wobei der GN-Speisenbehälter (30) aus einem induktionsfähigen metallischen Mehrschichtmaterial oder einem anderen induktionsfähigen Material besteht,
**dadurch gekennzeichnet**
**dass** die Steuerschaltung auf mehrere Heizleistungsstufen mit jeweils fest zugeordneter oder wählbarer Beheizungszeit oder -zeitkombination vorprogrammierbar oder vorprogrammiert ist,
wobei die einzelnen Stufen auf das Material, aus dem der GN-Speisenbehälter (30) besteht, abgestimmt sind und
wobei die Stufen in Abhängigkeit von einer auf der Kochplatte (10) zu garenden oder fertigzugarenden Speise einzeln oder in Kombination und mit zugeordneter oder wählbarer Beheizungszeit oder -zeitkombination auswählbar sind,
**dass** eine Betätigungseinrichtung (20) vorgesehen ist zum Auswählen der einzelnen Heizleistungsstufen mit den oder ohne die zugeordneten Beheizungszeiten oder -zeitkombinationen,
wobei das Auswählen anhand einer Garinformation erfolgt, die auf das Material, aus dem der GN-Speisenbehälter (30) besteht, abgestimmt und in Abhängigkeit von der in dem Behälter enthaltenen Speise vorab festgelegt worden ist.

2. Kombination nach Anspruch 1, **dadurch gekennzeichnet, dass** die Steuerschaltung zu einer Temperaturregelschaltung ausgebaut oder mit einer übergeordneten Temperaturregelschaltung verbunden ist.

3. Kombination nach Anspruch 1 oder 2, **dadurch gekennzeichnet, dass** die elektrische Heizeinrichtung (14) so schaltbar ist, dass das Kochfeld (12) in GN-Bruchteilen des GN-Formats der Kochplatte (10) beheizbar ist.

4. Kombination nach einem der vorhergehenden Ansprüche, **dadurch gekennzeichnet, dass** die Betätigungseinrichtung (20) der Kochplatte (10) eine mit der Steuerschaltung verbundene Leseeinheit (38) zum berührungslosen Lesen von Garinformation aufweist, die in einem an dem GN-Speisenbehälter (30) angebrachten Etikett (36) und/oder RFID-Transponder (34) enthalten ist.

5. Kombination nach einem der vorhergehenden Ansprüche, **dadurch gekennzeichnet, dass** das andere induktionsfähige Material ein mit induktionsfähigem Material beschichtetes oder versetztes Keramikmaterial ist.

6. Kombination nach einem der vorhergehenden Ansprüche, **gekennzeichnet durch** einen auf das GN-Format des GN-Speisenbehälters (30) abgestimmten Deckel (32), der zusätzlich zu dem GN-Speisenbehälter (30) oder statt desselben mit einem berührungslos lesbaren und die Garinformation aufnehmenden oder enthaltenen Etikett (36) und/oder RFID-Transponder (34) versehen ist.

7. Verfahren zum Garen oder Fertiggaren von Speisen mit einer Kombination nach einem der vorhergehenden Ansprüche,
**gekennzeichnet durch** folgende Schritte:
- Bereitstellen eines GN-Speisenbehälters (30), der eine vorbereitete, insbesondere vorgegarte Speise enthält,
- Bereitstellen von Garinformation für das Garen oder Fertiggaren der Speise in dem GN-Speisenbehälter (30) und
- Garen oder Fertiggaren der Speise in dem GN-Speisenbehälter (30) auf der Kochplatte (10) mit **durch** die Garinformation vorgegebener Heizleistungstufe und Beheizungszeit oder -zeitkombination,
wobei
die Heizleistungsstufe (P1 - P6) und die Beheizungszeit oder
- zeitkombination in der Garinformation abgestimmt auf das Material, aus dem der GN-Speisenbehälter (30) besteht, und in Abhängigkeit von der in dem Behälter (30) enthaltenen Speise festgelegt werden.

8. Verfahren nach Anspruch 7, **dadurch gekennzeichnet, dass** der Schritt des Bereitstellens von Garinformation für das Garen oder Fertiggaren der Speise beinhaltet, dass die für das Garen oder Fertiggaren der Speise bestimmte Garinformation in einem an dem GN-Speisenbehälter (30) angebrachten oder in den GN-Speisenbehälter (30) integrierten, berührungslos lesbaren Etikett (36) und/oder RFID-Transponder (34) bereitgestellt wird, und dass der Schritt des Garens oder Fertiggarens der Speise in dem GN-Speisenbehälter (30) auf der Kochplatte (10) beinhaltet, dass das Garen oder Fertiggaren mit durch die aus dem Etikett (36) und/oder dem RFID-Transponder (34) ausgelesener Garinformation vorgegebener Heizleistungsstufe (P1 - P6) und Beheizungszeit oder -zeitkombination durchgeführt wird.

## Claims

1. Combination of a hot plate (10) and a food container, wherein the hot plate (10) is provided with a hot area (12) having an inductive electrical heating device (14) and a control circuit for influencing at least the heating power of the hot area (10) at least in dependence of the type of a food item located inside a food container to be placed onto the hot plate (10),
wherein the hot plate (10) is implemented as a table cooking device adapted to the size of a GN food container (30),
wherein the GN food container (30) consists of an induction-capable metallic multilayer material or another induction-capable material,
**characterized in that** the control circuit is preprogrammable or preprogrammed to several heating power levels each of which has a statically assigned or selectable heating time or heating time combination,
wherein the individual levels are adapted to the material of which the GN food container (30) consists and
wherein the levels are selectable in dependence of a food item to be cooked or to be further cooked on the hot plate (10) individually or in combination and with an associated or selectable heating time or heating time combination,
wherein an actuation means (20) is provided for selecting the individual heating power levels with or without the associated heating times or heating time combinations,
wherein the selection is made on the basis of cooking information, which is adapted to the material of which the GN food container (30) consists, and which has been predefined in dependence of the food item located inside the container.

2. Combination of claim 1, **characterized in that** the control circuit comprises a temperature control circuit or is connected to a superior temperature control means.

3. Combination of claim 1 or 2, **characterized in that** the electrical heating means (14) is switchable so that the hot area (12) is heatable in GN fractions of the GN format of the hot plate (10).

4. Combination of one of the preceding claims, **characterized in that** the actuation means (20) of the hot plate (10) comprises a read unit (38) connected to the control circuit for contactless reading of cooking information contained in a tag (36) and/or RFID transponder (34) attached to the GN food container (30).

5. Combination of one of the preceding claims, **characterized in that** the other induction-capable material is a ceramic material which is coated or mixed with an induction-capable material.

6. Combination of one of the preceding claims, **characterized by** a cover (32) which is adapted to the GN format of the GN food container (30) and which is provided, in addition to or instead of the GN food container (30), with a tag (36) which can be read in a contactless manner and which receives or contains the cooking information.

7. Method for cooking or final cooking of food using a combination of one of the preceding claims,
**characterized by** the following steps:
- providing a GN food container (30) which contains a prepared food item, notably a precooked food item,
- providing cooking information for cooking or final cooking of the food item in the GN food container (30) and
- cooking or final cooking of the food item in the GN food container (30) on the hot plate (10) with a heating power level and a heating time or heating time combination prescribed by the cooking information,
wherein
the heating power level (P1 - P6) and the heating time or heating time combination in the cooking information are defined in accordance with the material of which the GN food container (30) consists and in dependence of the food item contained in the container (30).

8. The method of claim 7, **characterized in that** the step of providing cooking information for cooking or final cooking of the food item includes providing the cooking information intended for cooking or final cooking of the food item inside a tag (36) and/or RFID transponder (34) which can be read in a contactless manner and which is attached to or integrated in the GN food container (30) and **in that** the step of cooking or final cooking the food item in the GN food container (30) on the hot plate (10) includes performing the cooking or final cooking with a heating power level (P1 - P6) and heating time or heating time combination prescribed by heating information read from the tag (36) and/or the RFID transponder (34).

## Revendications

1. Combinaison d'une plaque de cuisson (10) et d'un contenant alimentaire, la plaque de cuisson (10) étant pourvue d'une zone de cuisson (12) comportant un dispositif de chauffage (14) inductif électrique et un circuit de contrôle pour influencer au moins la puissance de chauffage de la plaque de cuisson (10) au moins en fonction du type d'un aliment situé dans un contenant alimentaire qui peut être placé sur la plaque de cuisson (10),
la plaque de cuisson (10) étant un dispositif de cuisson à table adapté à la dimension d'un contenant alimentaire GN (30),
le contenant GN (30) consistant d'un matériau multicouche métallique inducteur ou d'un outre matériau inducteur,
**caractérisé en ce que** le circuit de contrôle est préprogrammable ou préprogrammé sur plusieurs niveaux de puissance de chauffage dont chacun est associé de manière permanente ou choisissable avec un temps de chauffage ou une combinaison de temps de chauffage,
les niveaux individuels étant adaptés au matériau duquel consiste le contenant alimentaire GN (30), et
les niveaux étant choisissables en fonction d'un aliment à cuire ou à cuire jusqu'à la fin sur la plaque de cuisson individuellement ou en combinaison et avec un temps de chauffage associé ou choisissable ou avec une combinaison de temps de chauffage associée ou choisissable,
et **en ce qu'**un dispositif de commande (20) est prévu pour choisir les niveaux de puissance de chauffage individuels avec ou sans les temps de chauffage ou les combinaisons de temps de chauffage associés,
le choix s'effectuant sur la base d'une information de cuisson qui a été adaptée au matériau duquel consiste le contenant alimentaire GN (30) et qui a été définie préalablement en fonction de l'aliment contenu dans le contenant.

2. Combinaison selon la revendication 1, **caractérisée en ce que** le circuit de contrôle comprend un circuit de réglage de température ou est relié à un circuit de réglage de température supérieur.

3. Combinaison selon les revendications 1 ou 2, **caractérisée en ce que** le dispositif de chauffage électrique (14) peut être couplé de sorte que la zone de cuisson (12) peut être chauffée en fractions GN du format GN de la plaque de cuisson (10).

4. Combinaison selon l'une des revendications précédentes, **caractérisée en ce que** le dispositif de commande (20) de la plaque de cuisson (10) comporte une unité de lecture (38) reliée au circuit de contrôle pour lire, sans contact, de l'information de cuisson contenue dans une étiquette (36) et/ou transpondeur RFID (34) disposée au contenant alimentaire (30).

5. Combinaison selon l'une des revendications précédentes, **caractérisée en ce que** l'autre matériau inducteur est un matériau céramique revêtu ou mélangé avec un matériau inducteur.

6. Combinaison selon l'une des revendications précédentes, **caractérisé par** un couvercle (32) adapté au format GN du contenant alimentaire GN (30), qui en plus du contenant alimentaire GN (30) ou au lieu de celui-ci est pourvu d'une étiquette (36) et/ou transpondeur RFID (34) qui peut être lue sans contact et qui reçoit ou contient l'information de cuisson.

7. Procédé pour cuir un aliment ou pour le cuir jusqu'à la fin, avec une combinaison selon l'une des revendications précédentes,
**caractérisé par** les étapes suivantes:
- mise à disposition d'un contenant alimentaire GN (30) qui contient un aliment préparé, notamment un aliment précuit,
- mise à disposition d'information de cuisson pour cuir l'aliment, ou pour le cuir jusqu'à la fin dans le continent alimentaire GN (30) et
- cuisson ou finition de cuisson de l'aliment dans le contenant alimentaire GN (30) sur la plaque de cuisson (10) avec un niveau de puissance de chauffage et un temps de chauffage ou une combinaison de temps de chauffage prescrits par l'information de cuisson,
le niveau de puissance de chauffage (P1 - P6) et le temps de chauffage ou la combinaison de temps de chauffage étant définis en accord avec le matériau duquel consiste le contenant alimentaire GN (30) et en fonction de l'aliment contenue dans le contenant (30).

8. Procédé selon revendication 7, **caractérisé en ce que** l'étape de la mise à disposition d'information de cuisson pour cuir l'aliment ou pour le cuir jusqu'à la fin comporte la mise à disposition de l'information de cuisson destinée pour cuir l'aliment, ou pour le cuir jusqu'à la fin, dans une étiquette (36) et/ou un transpondeur RFID (34) attachée au contenant alimentaire GN (30) ou intégrée dans celui-ci et qui peut être lue sans contact, et **en ce que** l'étape de cuir l'aliment, ou de le cuir jusqu'à la fin, dans le contenant alimentaire GN (30) sur la plaque de cuisson (10) comporte la cuisson ou la finition de cuisson avec un niveau de puissance de chauffage (P1 - P6) et un temps de chauffage ou une combinaison de temps de chauffage prescrits par l'information de cuisson lue de l'étiquette (36) et/ou du transpondeur RFID (34).
